# EUROPEAN PATENT APPLICATION

(11) **EP 2 833 664 A1**
(43) Date of publication of application: **04.02.2015**
(21) Application number: 12873408.4
(22) Date of filing: 26.03.2012
(51) Int. Cl.: H04W 24/00

(54) **METHOD AND DEVICE FOR SOLVING UPLINK INTERFERENCE IN HETEROGENEOUS NETWORK**

(71) Applicant: Fujitsu Limited, Kawasaki-shi, Kanagawa 211-8588 (JP)
(72) Inventor: LI, Zhaojun, Beijing 100025 (CN); WU, Lianhai, Beijing 100025 (CN); WANG, Weiwei, Beijing 100025 (CN); CHANG, Ningjuan, Beijing 100025 (CN)
(74) Representative: Schultes, Stephan
(86) International application number: PCT/CN2012/073046
(87) International publication number: WO 2013/143056

(57) **Abstract**

The present invention relates to the field of communications, and in particular to a method and apparatus of uplink interference coordination in a heterogeneous network. The method includes: monitoring uplink channel quality of terminal equipment; acquiring an uplink almost blank subframe when uplink interference appears, with terminal equipment in a Macro cell in the uplink almost blank subframe transmitting at reduced transmission power or no transmission power; and scheduling the terminal equipment subjected to uplink interference on the uplink almost blank subframe to perform uplink communication. With the embodiments of the present invention, interference brought by the uplink data transmission of the terminal equipment of the Macro cell to the uplink reception of the terminal equipment of the Pico cell may be avoided, thereby ensuring the uplink channel quality of the terminal equipment in the Pico cell.

## Description

### Technical Field

The present invention relates to the field of communications, and in particular to a method and apparatus of uplink interference coordination in a heterogeneous network.

### Background

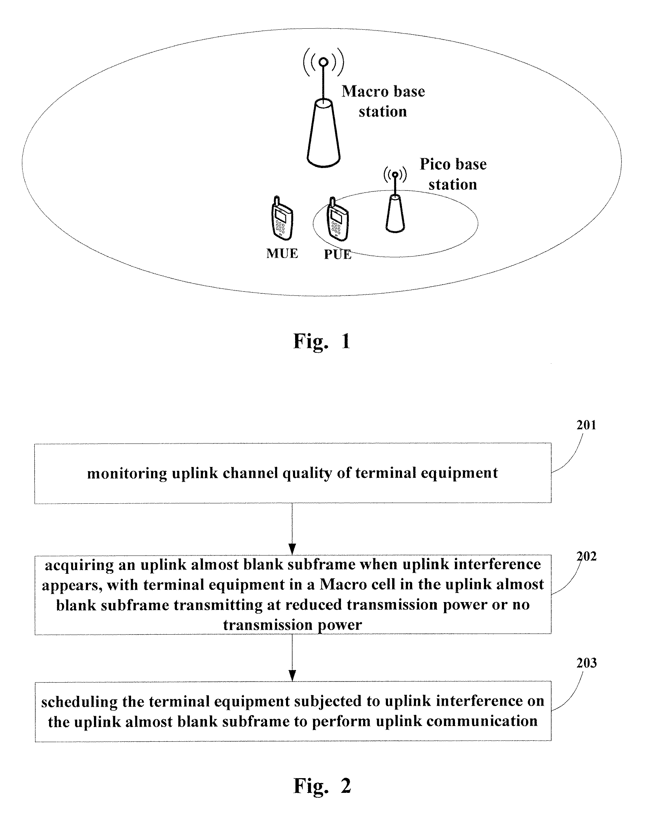

In a heterogeneous network, a system capacity may be improved or a system coverage may be expanded by deploying a base station with small power, such as a Pico base station. Figure 1 shows a schematic diagram of deployment of a Pico base station in the prior art. The Pico base station is deployed in a coverage of a Macro base station, and a signal intensity of the Pico base station may be weaker than that of the Macro base station. Hence, downlink communication of terminal equipment in a Pico cell (PUE) will be subjected to interference of terminal equipment in a Macro cell (MUE). In the prior art, the problem of interference to downlink communication is solved by transmitting almost blank subframes (ABSs) by the Macro base station to the Pico base station. The terminal equipment of the Macro cell performs powerless downlink transmission (or downlink transmission of low power) in the ABSs, and the terminal equipment of the Macro cell performs full-power downlink transmission in non-ABSs, so that the Pico base station may schedule the PUE subjected to interference in the ABSs for performing downlink transmission, thereby ensuring the channel quality of its downlink reception.

However, the following issue is not taken into account in the prior art: in deployment scenarios similar to the above, uplink data transmission of terminal equipment of the Macro cell (MUE) adjacent to an edge of the Pico base station will bring intense interference to uplink reception of the PUE in the Pico cell.

It should be noted that the above description of the background is merely provided for clear and complete explanation of the present invention and for easy understanding by those skilled in the art. And it should not be understood that the above technical solution is known to those skilled in the art as it is described in the background of the present invention.

### Summary

Embodiments of the present invention provide a method and apparatus of uplink interference coordination in a heterogeneous network, so as to solve a problem in the prior art that uplink of terminal equipment of a Macro cell brings interference to uplink communication of terminal equipment at an edge of a Pico cell.

An embodiment of the present invention provides a method of uplink interference coordination in a heterogeneous network, including:
monitoring uplink channel quality of terminal equipment;
acquiring an uplink almost blank subframe when uplink interference appears, with terminal equipment in a Macro cell in the uplink almost blank subframe transmitting at reduced transmission power or no transmission power; and
scheduling the terminal equipment subjected to uplink interference on the uplink almost blank subframe to perform uplink communication.

An embodiment of the present invention further provides a method of uplink interference coordination in a heterogeneous network, including:
receiving an uplink interference notification transmitted by a Pico base station; and
transmitting an uplink almost blank subframe to the Pico base station.

An embodiment of the present invention further provides a Pico base station of uplink interference coordination in a heterogeneous network, including:
a monitoring unit, configured to monitor uplink channel quality of terminal equipment;
an acquiring unit, configured to acquire an uplink almost blank subframe when uplink interference appears, with terminal equipment in a Macro cell in the uplink almost blank subframe transmitting at reduced transmission power or no transmission power; and
a scheduling unit, configured to schedule the terminal equipment subjected to uplink interference in the uplink almost blank subframe to perform uplink communication.

An embodiment of the present invention further provides a Macro base station of uplink interference coordination in a heterogeneous network, including:
a receiving unit, configured to receive an uplink interference notification transmitted by a Pico base station; and
a transmitting unit, configured to transmit an uplink almost blank subframe to the Pico base station.

An embodiment of the present invention further provides a computer-readable program, wherein when the program is executed in a Pico base station, the program enables a computer to carry out the method of uplink interference coordination in a heterogeneous network as described above in the Pico base station.

An embodiment of the present invention further provides a storage medium in which a computer-readable program is stored, wherein the computer-readable program enables a computer to carry out the method of uplink interference coordination in a heterogeneous network as described above in a Pico base station.

An embodiment of the present invention further provides a computer-readable program, wherein when the program is executed in a Macro base station, the program enables a computer to carry out the method of uplink interference coordination in a heterogeneous network as described above in the Macro base station.

An embodiment of the present invention further provides a storage medium in which a computer-readable program is stored, wherein the computer-readable program enables a computer to carry out the method of uplink interference coordination in a heterogeneous network as described above in a Macro base station.

The advantage of the embodiments of the present invention resides in that interference is brought by the uplink data transmission of the terminal equipment of the Macro cell to the uplink reception of the terminal equipment of the Pico cell, thereby ensuring the uplink channel quality of the terminal equipment in the Pico cell.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including/comprises/comprising" when used in this specification is taken to specify the presence of stated features, integers, steps or components but does not preclude the presence or addition of one or more other features, integers, steps, components or groups thereof.

### Brief Description of the Drawings

The drawings are described herein to provide further understanding of the present invention, which constitute a part of this application, and does not constitute a limit to the present invention. In the drawings:
Figure 1 is a schematic diagram of deployment of a Pico base station in the prior art;
Figure 2 is a flowchart of a method of coordination of uplink interference in a heterogeneous network of Embodiment 1 of the present invention;
Figure 3 is a flowchart of a method of coordination of uplink interference in a heterogeneous network of Embodiment 2 of the present invention;
Figure 4 is a schematic diagram of the structure of a Pico base station of coordination of uplink interference in a heterogeneous network of Embodiment 3 of the present invention;
Figure 5 is a schematic diagram of the structure of a Macro base station of coordination of uplink interference in a heterogeneous network of Embodiment 4 of the present invention;
Figure 6 is a flowchart of a method of coordination of uplink interference of Embodiment 5 of the present invention in the scenario shown in Fig. 1;
Figure 7 is a diagram of deployment relationship between a Macro base station and a Pico base station of Embodiment 6 of the present invention;
Figure 8 is a flowchart of a method of coordination of uplink interference of Embodiment 6 of the present invention in the scenario shown in Fig. 7;
Figure 9 is a flowchart of a method of coordination of uplink interference of Embodiment 7 of the present invention; and
Figure 10 is a schematic diagram of an uplink almost blank subframe of an embodiment of the present invention.

### Detailed Description

For more clarity of the object, technical solution and advantage of the present invention, particular embodiments of the present invention shall be described below with reference to the accompanying drawings. The exemplary embodiments and their description of the present invention here are used to explain the present invention, and are not intended to limit the present invention.

### Embodiment 1

Fig. 2 is a flowchart of a method of uplink interference coordination in a heterogeneous network of an embodiment of the present invention.

The method includes:
step 201: monitoring uplink channel quality of terminal equipment;
step 202: acquiring an uplink almost blank subframe when uplink interference appears, with terminal equipment in a Macro cell in the uplink almost blank subframe transmitting at reduced transmission power or no transmission power; and
step 203: scheduling the terminal equipment subjected to uplink interference on the uplink almost blank subframe to perform uplink communication.

In step 202, when the uplink interference appears, the Macro base station bringing uplink interference to the terminal equipment of the Pico cell is notified; wherein, all Macro base stations bringing uplink interference to the terminal equipment of the Pico cell may be notified. For example, two or more Macro base stations may be notified of that the terminal equipment of the Pico cell receives uplink interference, and an existing load indication message may be used to transmit the notification.

In the above steps, the Macro base station may be required to allocate an uplink almost blank subframe while the notification is transmitted.

Step 202 may further include: receiving the uplink almost blank subframe allocated by the Macro base station.

In step 202, when uplink interference appears, a corresponding idle uplink subframe is obtained through calculation according to the downlink almost blank subframe allocated by the Macro base station, and the idle uplink subframe is taken as the uplink almost blank subframe.

Step 203 may further include: configuring the terminal equipment subjected to uplink interference to transmit a channel sounding reference signal (SRS) in the uplink almost blank subframe, so as to obtain channel quality of the terminal equipment subjected to uplink interference in the uplink almost blank subframe, and scheduling the terminal equipment subjected to uplink interference to perform uplink communication in a corresponding resource of the uplink almost blank subframe according to the channel quality.

With the above embodiment, uplink interference brought by the Macro base station to the terminal equipment of the Pico cell may be lowered, thereby ensuring the uplink channel quality of the terminal equipment.

### Embodiment 2

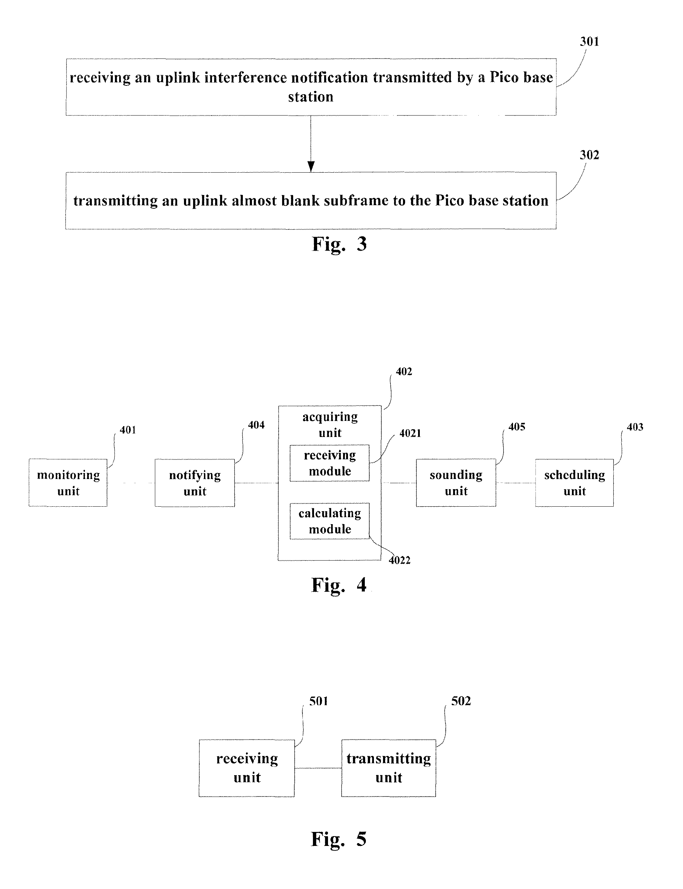

Fig. 3 is a flowchart of a method of uplink interference coordination in a heterogeneous network of an embodiment of the present invention.

The method includes:
step 301: receiving an uplink interference notification transmitted by a Pico base station; and
step 302: transmitting an uplink almost blank subframe to the Pico base station.

With the above embodiment, an uplink almost blank subframe may be configured for the Pico base station, and uplink interference brought by the Macro base station to the terminal equipment of the Pico cell may be lowered, thereby ensuring the uplink channel quality of the terminal equipment in the Pico cell.

### Embodiment 3

Fig. 4 is a schematic diagram of the structure of a Pico base station of uplink interference coordination in a heterogeneous network of an embodiment of the present invention.

The Pico base station includes:
a monitoring unit 401 configured to monitor uplink channel quality of terminal equipment;
an acquiring unit 402 configured to acquire an uplink almost blank subframe when uplink interference appears, with terminal equipment in a Macro cell in the uplink almost blank subframe transmitting at reduced transmission power or no transmission power; and
a scheduling unit 403 configured to schedule the terminal equipment subjected to uplink interference in the uplink almost blank subframe to perform uplink communication.

In this embodiment, it further includes a notifying unit 404 configured to notify the Macro base station bringing uplink interference to terminal equipment of a Pico cell when the uplink interference appears; wherein, all Macro base stations bringing uplink interference to the terminal equipment of the Pico cell may be notified. For example, two or more Macro base stations may be notified of that the terminal equipment of the Pico cell receives uplink interference, and an existing load indication message may be used to transmit the notification.

In the above embodiment, while transmitting the notification, the notifying unit 404 may further require the Macro base station to allocate an uplink almost blank subframe.

The acquiring unit 402 may further include a receiving module 4021 configured to receive the uplink almost blank subframe allocated by the Macro base station.

The acquiring unit 402 may further include a calculating module 4022 configured to obtain a corresponding idle uplink subframe through calculation according to the downlink almost blank subframe allocated by the Macro base station, and take the idle uplink subframe as the uplink almost blank subframe.

The Pico base station may further include a sounding unit 405 configured to configure the terminal equipment subjected to uplink interference to transmit a channel sounding reference signal in the uplink almost blank subframe, so as to obtain channel quality of the terminal equipment subjected to uplink interference in the uplink almost blank subframe; and the scheduling unit 403 schedules the terminal equipment subjected to uplink interference to perform uplink communication in the corresponding resource of the uplink almost blank subframe according to the channel quality.

With the above embodiment, uplink interference brought by the Macro base station to the terminal equipment of the Pico cell may be lowered, thereby ensuring the uplink channel quality of the terminal equipment.

### Embodiment 4

Fig. 5 is a schematic diagram of the structure of a Macro base station of uplink interference coordination in a heterogeneous network of an embodiment of the present invention.

The Macro base station includes:
a receiving unit 501 configured to receive an uplink interference notification transmitted by a Pico base station; and
a transmitting unit 502 configured to transmit an uplink almost blank subframe to the Pico base station.

With the above embodiment, an uplink almost blank subframe may be configured for the Pico base station, and uplink interference brought by the Macro cell to the terminal equipment of the Pico cell may be lowered, thereby ensuring the uplink channel quality of the terminal equipment in the Pico cell.

### Embodiment 5

This embodiment may refer to the scenario shown in Fig. 1, in which uplink reception of terminal equipment at an edge of a Pico cell (PUE) is subjected to interference of uplink data of terminal equipment in a Macro cell (MUE).

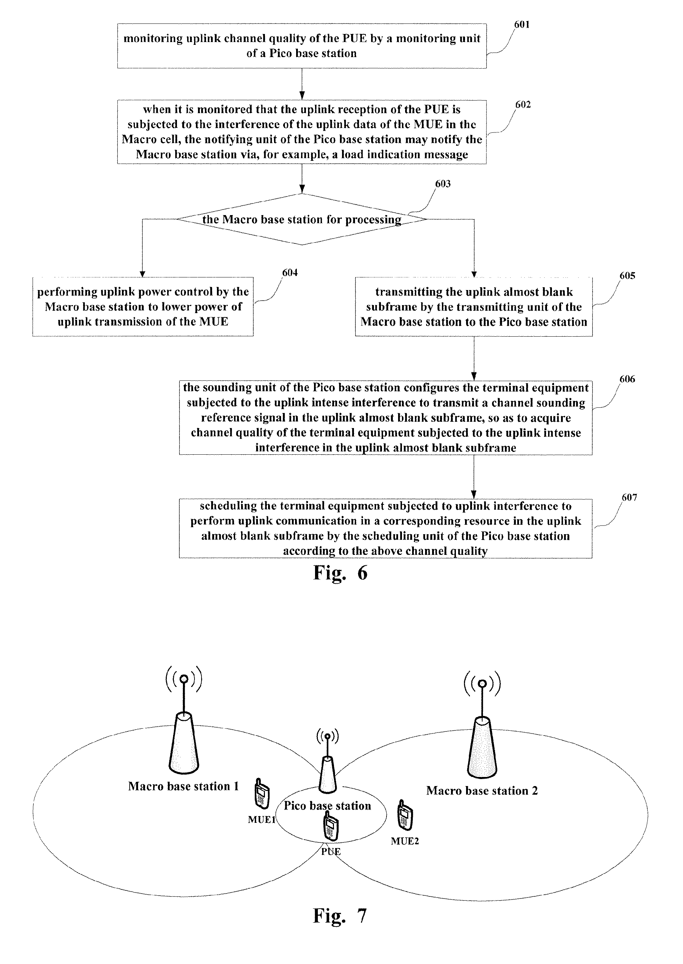

Fig. 6 is a flowchart of a method of uplink interference coordination in the scenario shown in Fig. 1.

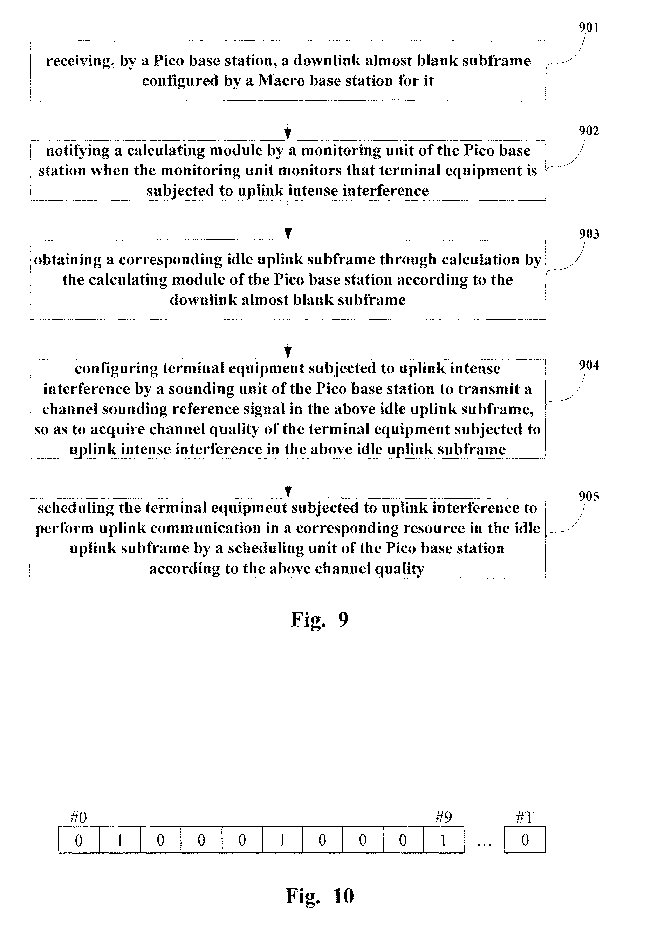

The method includes:
step 601: monitoring uplink channel quality of the PUE by a monitoring unit of a Pico base station;
step 602: obtaining a signal to interference plus noise ratio (SINR) through calculation according to an SRS transmitted by UE, for example, when it is monitored that the uplink reception of the PUE is subjected to the interference of the uplink data of the MUE in the Macro cell; if the value is less than a threshold, it may be deemed that the interference is severe, the notifying unit of the Pico base station may notify the Macro base station via, for example, a load indication message, of that the terminal equipment of the Pico base station is subjected to intense uplink interference; or, the Macro base station is required to transmit an uplink almost blank subframe while the uplink interference notification is transmitted to the Macro base station;
step 603: entering into step 604 or step 605 by the Macro base station for processing when the receiving unit of the Macro base station receives the notification that the PUE of the Pico base station is subjected to uplink intense interference;
step 604: performing uplink power control by the Macro base station, for example, to lower power of uplink transmission of the MUE, so as to avoid uplink intense interference to the PUE;
step 605: transmitting the uplink almost blank subframe by the transmitting unit of the Macro base station to the Pico base station, with the terminal equipment in a Macro cell in the uplink almost blank subframe transmitting at reduced transmission power or no transmission power; wherein, the transmitted uplink almost blank subframe may be in a mode of configured subframe, that is, 0 and 1 are used to indicate which of radio frames are uplink almost blank subframes; Fig. 10 is a schematic diagram of an uplink almost blank subframe of an embodiment of the present invention, in which it is assumed that a period is T subframe, 0 denotes that a subframe is a normal subframe, and 1 denotes an uplink almost blank subframe;
if the Pico base station transmits at the same time a request requiring the Macro base station to send back an uplink almost blank subframe, in this step, the Macro base station may reject the request of the Pico base station requiring to send back an uplink almost blank subframe;
step 606: receiving, by the receiving module of the Pico base station, the uplink almost blank subframe configured by the Macro base station, and the sounding unit of the Pico base station configures the terminal equipment subjected to the uplink intense interference to transmit a channel sounding reference signal in the uplink almost blank subframe, so as to acquire channel quality of the terminal equipment subjected to the uplink intense interference in the uplink almost blank subframe; and
step 607: scheduling the terminal equipment subjected to uplink interference to perform uplink communication in a corresponding resource in the uplink almost blank subframe by the scheduling unit of the Pico base station according to the above channel quality; for example, the Pico base station may obtain channel quality of resources in different frequency domains, that is, physical radio blocks (PRBs), of the UE, according to the SRS, and the Pico base station may select relatively good PRBs in an available range of PRBs, for use by the UE in transmitting uplink data.

### Embodiment 6

Fig. 7 is a diagram of deployment relationship between a Macro base station and a Pico base station of the embodiment of the present invention.

In the scenario shown in Fig. 7, the uplink reception of the terminal equipment at an edge of the Pico base station (PUE) is subjected to interference of uplink data of terminal equipment (MUE1 and MUE2) in two Macro cells. And in other embodiments, it may be subjected to interference of uplink data of terminal equipment in more Macro cells.

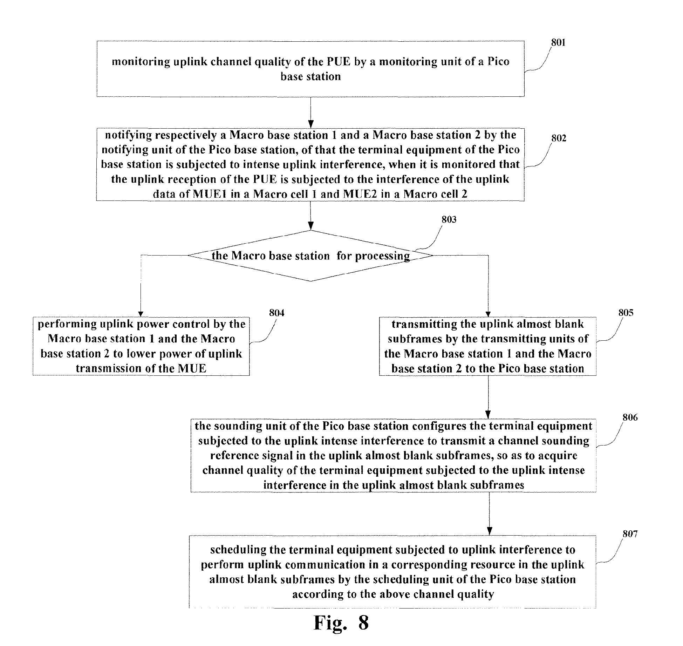

Fig. 8 is a flowchart of a method of uplink interference coordination in the scenario shown in Fig. 7.

The method includes:
step 801: monitoring uplink channel quality of the PUE by a monitoring unit of a Pico base station;
step 802: notifying respectively a Macro base station 1 and a Macro base station 2 by the notifying unit of the Pico base station, of that the terminal equipment of the Pico base station is subjected to intense uplink interference, via, for example, a load indication message, when it is monitored that the uplink reception of the PUE is subjected to the interference of the uplink data of MUE1 in a Macro cell 1 and MUE2 in a Macro cell 2; or, the Macro base stations are required to transmit uplink almost blank subframes while the uplink interference notifications are transmitted to the Macro base station 1 and the Macro base station 2;
step 803: entering into step 804 by the Macro base station 1 and the Macro base station 2 for processing when the receiving units of the Macro base station 1 and the Macro base station 2 receive respectively the notification that the PUE of the Pico base station is subjected to uplink intense interference; or, entering into step 805 by the Macro base station 1 and the Macro base station 2 for processing;
step 804: performing uplink power control by the Macro base station 1 and the Macro base station 2, for example, to lower power of uplink transmission of the MUE, so as to avoid uplink intense interference to the PUE;
step 805: transmitting respectively the uplink almost blank subframes by the transmitting units of the Macro base station 1 and the Macro base station 2 to the Pico base station, with the terminal equipment in the Macro cell 1 and the Macro cell 2 in the uplink almost blank subframes transmitting at reduced transmission power or no transmission power; wherein, the transmitted uplink almost blank subframes may be in a mode of configured subframe, that is, 0 and 1 are used to indicate which of radio frames are uplink almost blank subframe, 1 denoting an uplink almost blank subframe, for example;
if the Pico base station transmits at the same time a request requiring the Macro base station 1 and the Macro base station 2 to send back uplink almost blank subframes, in this step, the Macro base station 1 and the Macro base station 2 may reject the request of the Pico base station requiring to send back an uplink almost blank subframes;
step 806: receiving by the receiving module of the Pico base station the uplink almost blank subframes configured by the Macro base station 1 and the Macro base station 2, and the sounding unit of the Pico base station configures the terminal equipment subjected to the uplink intense interference to transmit a channel sounding reference signal in the uplink almost blank subframes, so as to acquire channel quality of the terminal equipment subjected to the uplink intense interference in the uplink almost blank subframes; and
step 807: scheduling the terminal equipment subjected to uplink interference to perform uplink communication in a corresponding resource in the uplink almost blank subframes by the scheduling unit of the Pico base station according to the above channel quality; for example, the Pico base station may obtain channel quality of resources in different frequency domains, that is, physical radio blocks (PRBs), of the UE, according to the SRS, and the Pico base station may select relatively good PRBs in an available range of PRBs, for use by the UE in transmitting uplink data.

### Embodiment 7

Fig. 9 is a flowchart of a method of uplink interference coordination of the embodiment of the present invention.

This embodiment may be applicable to a scenario of data traffic, such as accessing a network by terminal equipment.

The method includes:
step 901: receiving, by a Pico base station, a downlink almost blank subframe configured by a Macro base station for it;
step 902: notifying a calculating module by a monitoring unit of the Pico base station when the monitoring unit monitors that terminal equipment is subjected to uplink intense interference;
step 903: obtaining a corresponding idle uplink subframe through calculation by the calculating module of the Pico base station according to the downlink almost blank subframe; for example, in frequency division duplexing (FDD), if the downlink almost blank subframe is n, MUE of a Macro cell in a corresponding n+4 uplink subframe does not perform uplink data transmission, and the n+4 subframe may be taken as the idle uplink subframe;
step 904: configuring terminal equipment subjected to uplink intense interference by a sounding unit of the Pico base station to transmit a channel sounding reference signal in the above idle uplink subframe, so as to acquire channel quality of the terminal equipment subjected to uplink intense interference in the above idle uplink subframe; and
step 905: scheduling the terminal equipment subjected to uplink interference to perform uplink communication in a corresponding resource in the idle uplink subframe by a scheduling unit of the Pico base station according to the above channel quality; for example, the Pico base station may obtain channel quality of resources in different frequency domains, that is, physical radio blocks (PRBs), of the UE, according to the SRS, and the Pico base station may select relatively good PRBs in an available range of PRBs, for use by the UE in transmitting uplink data.

### Embodiment 8

An embodiment of the present invention further provides a computer-readable program, wherein when the program is executed in a Pico base station, the program enables a computer to carry out the method of uplink interference coordination in a heterogeneous network as described above in the Pico base station.

An embodiment of the present invention further provides a storage medium in which a computer-readable program is stored, wherein the computer-readable program enables a computer to carry out the method of uplink interference coordination in a heterogeneous network as described above in a Pico base station.

An embodiment of the present invention further provides a computer-readable program, wherein when the program is executed in a Macro base station, the program enables a computer to carry out the method of uplink interference coordination in a heterogeneous network as described above in the Macro base station.

An embodiment of the present invention further provides a storage medium in which a computer-readable program is stored, wherein the computer-readable program enables a computer to carry out the method of uplink interference coordination in a heterogeneous network as described above in a Macro base station.

With the above embodiments of the apparatus of the present invention, interference brought by the uplink data transmission of the terminal equipment of the Macro cell to the uplink reception of the terminal equipment of the Pico cell may be lowered, thereby ensuring the uplink channel quality of the terminal equipment in the Pico cell.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method of uplink interference coordination in a heterogeneous network, comprising:
monitoring uplink channel quality of terminal equipment;
acquiring an uplink almost blank subframe when uplink interference appears, with terminal equipment in a Macro cell in the uplink almost blank subframe transmitting at reduced transmission power or no transmission power; and
scheduling the terminal equipment subjected to uplink interference on the uplink almost blank subframe to perform uplink communication.

2. The method according to claim 1, wherein when the uplink interference appears, a Macro base station bringing uplink interference to terminal equipment of a Pico cell is notified.

3. The method according to claim 2, wherein the Macro base station is required to allocate the uplink almost blank subframe while the notification is transmitted.

4. The method according to claim 2, wherein after transmitting the notification, the method further comprises: receiving the uplink almost blank subframe allocated by the Macro base station.

5. The method according to claim 1, wherein when uplink interference appears, a corresponding idle uplink subframe is obtained through calculation according to a downlink almost blank subframe allocated by the Macro base station, and the idle uplink subframe is taken as the uplink almost blank subframe.

6. The method according to claim 1, wherein the step of scheduling the terminal equipment subjected to uplink interference on the uplink almost blank subframe to perform uplink communication further comprises:
configuring the terminal equipment subjected to uplink interference to transmit a channel sounding reference signal in the uplink almost blank subframe, so as to obtain channel quality of the terminal equipment subjected to uplink interference in the uplink almost blank subframe, and
scheduling the terminal equipment subjected to uplink interference to perform uplink communication in a corresponding resource of the uplink almost blank subframe according to the channel quality.

7. A method of uplink interference coordination in a heterogeneous network, comprising:
receiving an uplink interference notification transmitted by a Pico base station; and
transmitting an uplink almost blank subframe to the Pico base station.

8. A Pico base station of uplink interference coordination in a heterogeneous network, comprising:
a monitoring unit, configured to monitor uplink channel quality of terminal equipment;
an acquiring unit, configured to acquire an uplink almost blank subframe when uplink interference appears, with terminal equipment in a Macro cell in the uplink almost blank subframe transmitting at reduced transmission power or no transmission power; and
a scheduling unit, configured to schedule the terminal equipment subjected to uplink interference in the uplink almost blank subframe to perform uplink communication.

9. The Pico base station according to claim 8, further comprising:
a notifying unit, configured to notify the Macro base station bringing uplink interference to terminal equipment of a Pico cell when the uplink interference appears.

10. The Pico base station according to claim 9, wherein while transmitting the notification, the notifying unit requires the Macro base station to allocate the uplink almost blank subframe.

11. The Pico base station according to claim 8, wherein the acquiring unit further comprises:
a receiving module, configured to receive the uplink almost blank subframe allocated by the Macro base station.

12. The Pico base station according to claim 8, wherein the acquiring unit further comprises:
a calculating module, configured to obtain a corresponding idle uplink subframe through calculation according to a downlink almost blank subframe allocated by the Macro base station, and take the idle uplink subframe as the uplink almost blank subframe.

13. The Pico base station according to claim 8, further comprising:
a sounding unit, configured to configure the terminal equipment subjected to uplink interference to transmit a channel sounding reference signal in the uplink almost blank subframe, so as to obtain channel quality of the terminal equipment subjected to uplink interference in the uplink almost blank subframe;
and the scheduling unit schedules the terminal equipment subjected to uplink interference to perform uplink communication in the corresponding resource of the uplink almost blank subframe according to the channel quality.

14. A Macro base station of uplink interference coordination in a heterogeneous network, comprising:
a receiving unit, configured to receive an uplink interference notification transmitted by a Pico base station; and
a transmitting unit, configured to transmit an uplink almost blank subframe to the Pico base station.

15. A computer-readable program, wherein when the program is executed in a Pico base station, the program enables a computer to carry out the method of uplink interference coordination in a heterogeneous network as claimed in any one of claims 1-6 in the Pico base station.

16. A storage medium in which a computer-readable program is stored, wherein the computer-readable program enables a computer to carry out the method of uplink interference coordination in a heterogeneous network as claimed in any one of claims 1-6 in a Pico base station.

17. A computer-readable program, wherein when the program is executed in a Macro base station, the program enables a computer to carry out the method of uplink interference coordination in a heterogeneous network as claimed in claim 7 in the Macro base station.

18. A storage medium in which a computer-readable program is stored, wherein the computer-readable program enables a computer to carry out the method of uplink interference coordination in a heterogeneous network as claimed in claim 7 in a Macro base station.
